# FASCICULE DE BREVET EUROPEEN

(11) **EP 1 222 844 B1**
(45) Date de publication et mention de la délivrance du brevet: **27.08.2008**
(21) Numéro de dépôt: 02360015.8
(22) Date de dépôt: 10.01.2002
(51) Int. Cl.: A01B 33/14

(54) **Outil pour une fraise rotative**
Werkzeug für Rotorfräse
Tool for rotary tiller

(30) Priorité: 11.01.2001 FR 0100344
(43) Date de publication de la demande: 17.07.2002
(73) Titulaire: KUHN S.A., 67706 Saverne Cedex (FR)
(72) Inventeur: Oberle, Edmond, 67700 Haegen (FR)

(56) Documents cités:
- FR-A- 2 330 295
- US-A- 2 802 408
- US-A- 5 069 295
- PATENT ABSTRACTS OF JAPAN vol. 1996, no. 02, 29 février 1996 (1996-02-29) & JP 07 274604 A (SUNAMI SEISAKUSHO:KK;OTHERS: 01), 24 octobre 1995 (1995-10-24)
- PATENT ABSTRACTS OF JAPAN vol. 014, no. 180 (C-0708), 11 avril 1990 (1990-04-11) & JP 02 027901 A (YAMAMOTO SEISAKUSHO:KK;OTHERS: 01), 30 janvier 1990 (1990-01-30)

## Description

La présente invention se rapporte au domaine technique général des machines agricoles et, en particulier, des machines agricoles comportant des éléments d'usure susceptibles d'être remplacés plus ou moins fréquemment.

Plus précisément, la présente invention concerne une machine agricole comportant :
- un châssis pouvant être attelé à un tracteur ;
- un rotor lié audit châssis et animé en rotation lors du travail autour d'un axe, ledit rotor comportant :
   - au moins un support lié à un organe porteur, ledit support comportant au moins un fourreau ;
   - au moins un outil présentant une partie de liaison et une partie de travail et lié de manière amovible à un support respectif, ledit (ou au moins un desdits) outil(s) comporte une fente ouverte dirigée sensiblement suivant un sens de montage dudit outil dans ledit support correspondant ; et
   - un unique moyen de maintien immobilisant ledit outil dans son support respectif.

Une machine de ce genre, connue dans le document US 5 069 295 comporte un outil avec une partie de travail et une partie de fixation montée dans un support soudé sur le rotor de la machine. La partie de fixation de l'outil comporte une forme en crochet permettant son montage et son maintien par un axe transversal. L'outil est bloqué dans son support par un dispositif d'arrêt appartenant au support pour la position de travail.

Le montage de cet outil dans son support nécessite tout d'abord d'accoupler le crochet de la partie de fixation à l'axe transversal puis de faire pivoter l'outil dans le sens inverse de rotation du rotor. L'utilisateur doit forcer l'outil à se bloquer dans la position de travail. Lors du démontage, il devra débloquer l'outil usé avant de pouvoir le désaccoupler de l'axe transversal. Ces opérations de montage et démontage sont longues, délicates et présentent des risques pour l'utilisateur. D'autre part après de nombreux montage et démontage, l'usure du dispositif d'arrêt du support ne permet plus un maintien de l'outil dans la position de travail.

Une autre machine de travail du sol est aussi connue dans l'état de la technique. En effet, la demande de brevet FR 2 148 368 décrit une machine de préparation du sol comportant un arbre porte-outils et un nombre important de rondelles, soutenant des outils, disposées de manière sensiblement régulière sur la surface extérieure dudit rotor. Chaque outil comporte une partie de liaison et une partie de travail. Lesdits outils sont liés, de manière amovible, audit arbre porte-outils au moyen d'un support respectif. Lesdits supports sont, quant à eux, soudés sur le rotor, et chaque outil est maintenu dans son support respectif au moyen d'un boulon. Pour ce faire, ledit boulon traverse de part en part le support et l'outil correspondant. Il constitue ainsi un moyen de maintien qui bride l'outil dans le support respectif. Le rotor est lié, pour sa part, à un châssis dans une position sensiblement horizontale et fortement inclinée par rapport à la direction d'avance de ladite machine de préparation du sol. Lors du travail, le rotor est entraîné en rotation autour de son axe longitudinal, et lesdits outils viennent frapper le sol afin de préparer la terre aux travaux de semis.

Sur cette machine connue, lorsqu'un outil doit être remplacé suite à une casse par exemple, l'utilisateur doit, afin de désolidariser ledit outil de son support respectif, débloquer puis dévisser complètement le boulon correspondant. Puis, après avoir engagé un outil neuf dans le support, l'utilisateur doit remettre ledit boulon en place et le resserrer à un couple déterminé.

Mais l'expérience montre que, sur le terrain, ces opérations ne sont pas commodes à effectuer. De plus sur ce type de machine agricole, le contact répété des outils de travail avec le sol engendre une usure progressive de ces derniers. Par conséquent, après un certain nombre d'heures de travail, l'utilisateur peut également avoir besoin de remplacer l'ensemble des outils de travail de sa machine. Comme une machine de préparation du sol peut comporter jusqu'à plusieurs dizaines d'outils de travail, cette opération d'entretien est particulièrement pénible et coûteuse en temps.

Le but de la présente invention est de remédier à cet inconvénient de l'état de la technique en réalisant un outil dont les opérations de montage et de démontage sont rapides

et de réaliser une fixation rapide d'un outil de travail dans son support respectif.

Conformément à la présente invention, la machine agricole de travail du sol se caractérise par le fait que l'axe de ladite fente ouverte est sensiblement parallèle à un axe longitudinal dudit outil. De ce fait, les opérations de montage/démontage sont simplifiées.

Elles nécessitent uniquement un déblocage et un dévissage partiel du boulon afin de désolidariser un outil de travail de son support respectif. Ainsi, lors d'un remplacement d'outil de travail, l'intervention est de courte durée et permet un gain de temps non négligeable.

Selon une autre caractéristique avantageuse, l'outil de travail du sol comporte sur sa partie de liaison au moins un obstacle destiné à coopérer avec une forme complémentaire du moyen de maintien et/ou du support correspondant.

D'autres caractéristiques de l'invention apparaîtront dans les sous-revendications et dans la description suivante d'exemple de réalisation non limitatif de l'invention représenté sur les dessins annexés sur lesquels :
- la **figure 1** représente une vue latérale d'une machine de travail du sol, conforme à l'invention, en position de travail,
- la **figure 2** représente une vue suivant la flèche 1 de la figure 1,
- la **figure 3** représente, à une autre échelle, un tronçon du rotor de la machine de travail du sol visible sur la figure 2,
- la **figure 4** représente, vu suivant la flèche II de la figure 3, un exemple de réalisation de la liaison entre un outil et le rotor,
- la **figure 5** représente, vu suivant la flèche II, un exemple de réalisation d'un outil équipant le rotor de la figure 4,
- la **figure 6** représente une coupe partielle de la figure 4 suivant III de la fixation de l'outil sur son support respectif,
- la **figure 7** représente, vu suivant la flèche II de la figure 3, un autre exemple de réalisation de la liaison entre un outil et le rotor,
- la **figure 8** représente, vu suivant la flèche II, l'autre exemple de réalisation d'un outil équipant le rotor de la figure 7,
- la **figure 9** représente une coupe partielle de la figure 7 suivant IV de la fixation de l'outil sur son support respectif, à une autre échelle.

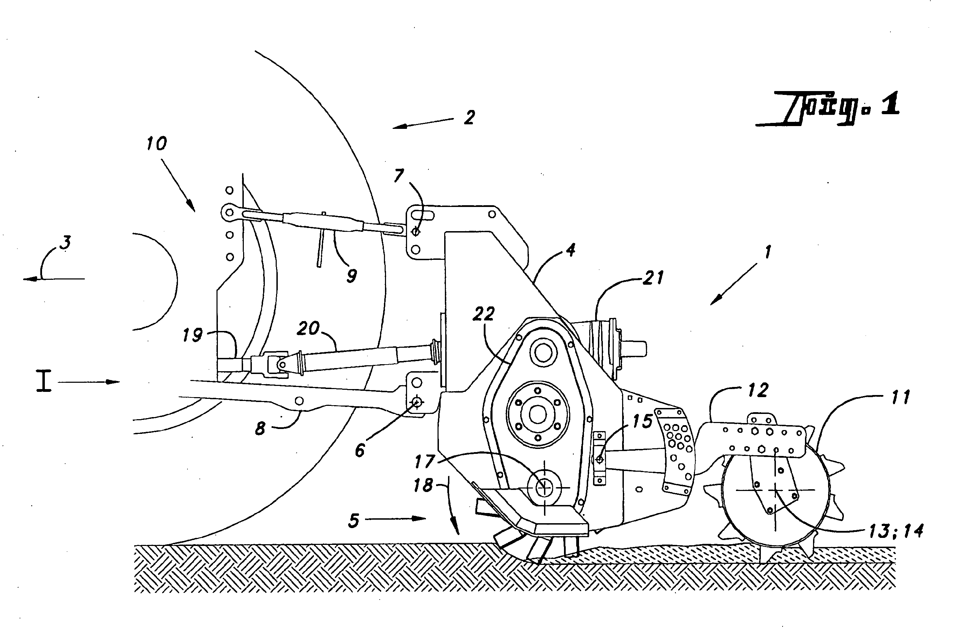

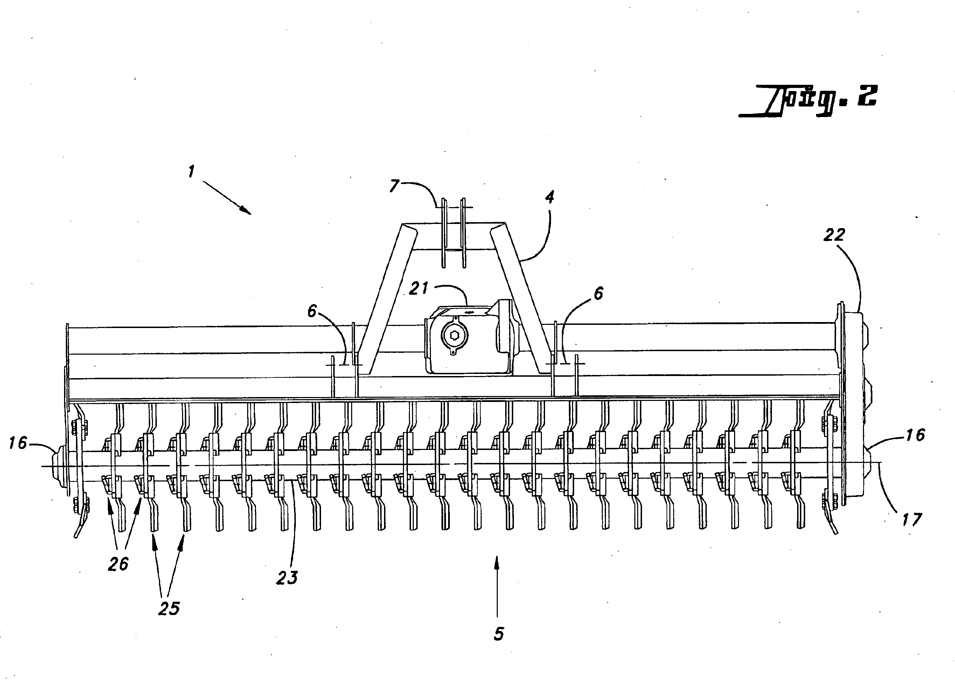

Les figures 1 et 2 montrent une machine de travail du sol, conforme à la présente invention, réalisée sous la forme d'une fraise rotative (1). Au travail, ladite machine de travail du sol (1) selon la figure 1 est accouplée à un tracteur (2), partiellement représenté, qui permet de déplacer ladite machine dans un champ suivant une direction et un sens d'avance indiqué par la flèche (3). A cet effet, ladite machine de travail du sol se compose d'un châssis (4) et d'un rotor (5) destiné à la préparation du sol.

Ledit châssis (4) comporte notamment deux points d'attelage inférieurs (6) et un point d'attelage supérieur (7). Lesdits points d'attelage (6, 7) sont prévus, d'une manière connue de l'homme de l'art, pour l'accouplement de ladite machine (1) aux bras inférieurs (8) et au bras supérieur (9) d'un attelage trois points (10) dudit tracteur (2). Lors du travail, ladite fraise rotative (1) repose, au moins partiellement, sur le sol avec un rouleau (11).

Ledit rouleau (11), agencé derrière ledit rotor (5) compte tenu de ladite direction d'avance (3), est lié audit châssis (4) au moyen de deux bras (12). Les extrémités arrière desdits bras (12) guident en rotation ledit rouleau (11) autour d'un axe (13) sensiblement horizontal et transversal à la direction d'avance (3). Lors du travail, ledit rouleau (11) peut ainsi rouler sur le sol en pivotant autour de son axe longitudinal (14) sensiblement confondu avec ledit axe (13). L'extrémité avant de chaque bras (12) est, quant à elle, respectivement liée à un coté latéral dudit châssis (4) au moyen d'une articulation (15). L'axe de chaque articulation (15) est avantageusement sensiblement parallèle audit axe longitudinal (14) dudit rouleau (11). D'une manière connue de l'homme de l'art, l'orientation desdits bras (12) autour desdites articulations (15) est réglable. Ainsi, ledit rouleau (11) permet de déterminer la profondeur de travail dudit rotor (5) tout en participant activement à la préparation de la bande de terre.

Selon l'exemple de réalisation représenté, ledit rotor (5) est lié, à chacune de ses extrémités, audit châssis (4) au moyen d'une articulation respective (16) de telle façon que l'axe longitudinal (17) dudit rotor (5) soit sensiblement parallèle à l'axe longitudinal (14) dudit rouleau (11). Ledit axe longitudinal (17) est sensiblement horizontal et dirigé transversalement à ladite direction d'avance (3) de ladite fraise rotative (1). Lors du travail, ledit rotor (5) est entraîné en rotation, autour de son axe longitudinal (17), dans le sens anti-horaire (18) compte tenu de la figure 1. A cet effet, ladite fraise rotative (1) comporte également des éléments de transmission (20, 21, 22) qui relient, d'une manière connue de l'homme de l'art, ledit rotor (5) à une prise de force (19) dudit tracteur (2). Lesdits éléments de transmission (20, 21, 22) se composent notamment d'un arbre de transmission à joints universels (20) qui transmet un mouvement de la prise de force (19) à un carter central (21). Ledit carter central (21) entraîne, à son tour, le rotor (5) par l'intermédiaire d'un carter latéral (22).

Comme représenté sur les figures 2 à 3, ledit rotor (5) est constitué d'un organe porteur, d'axe sensiblement horizontal confondu avec l'axe longitudinal (17) du rotor (5), sur lequel une multitude de flasques (24) sont fixés. Dans cet exemple de réalisation l'organe porteur est réalisé sous forme d'un tube (23). Lesdits flasques (24) sont disposés à intervalle sensiblement régulier le long dudit tube (23), et ils s'étendent respectivement dans des plans sensiblement orthogonaux à l'axe longitudinal (17) dudit rotor (5). Chaque flasque (24) supporte avantageusement quatre outils de travail (25) fixés de manière amovible sur un support (26) respectif. Lesdits outils (25) de ladite fraise rotative (1) sont enfoncés dans le sol et sont entraînés en rotation. Lesdits outils (25) ameublissent alors le terre et ledit rouleau (11), à l'arrière dudit rotor (5), écrase les mottes, tasse et égalise une bande de terre en vue des travaux de semis.

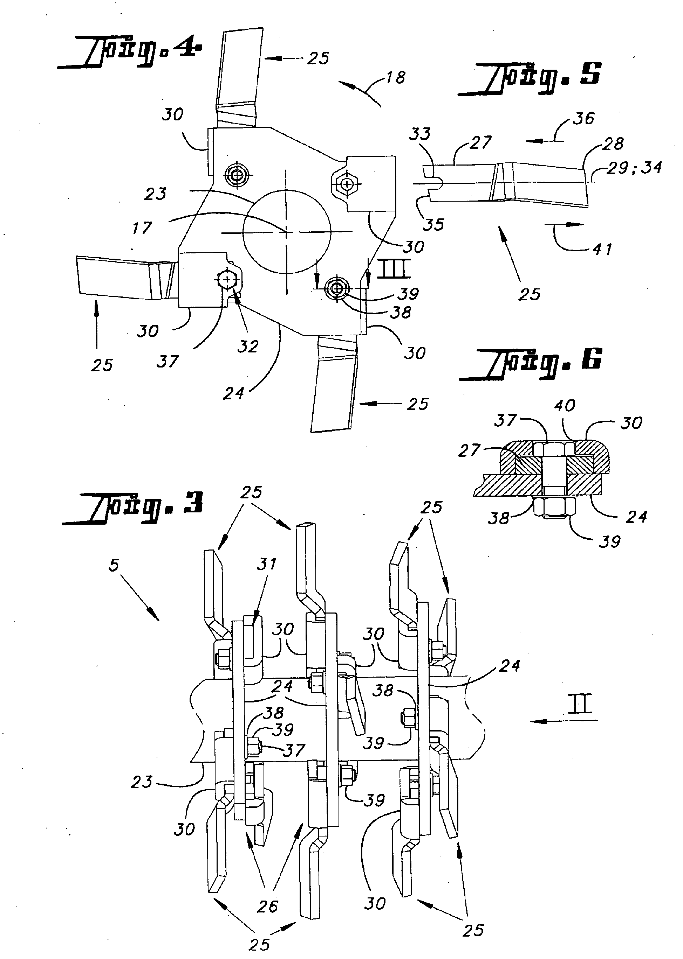

Chaque outil (25) est constitué d'une partie de liaison (27) et d'une partie de travail (28). Ladite partie de liaison (27) et ladite partie de travail (28) s'étendent, de préférence, selon des directions sensiblement parallèles de manière à réaliser une forme globale plane. Ladite partie de liaison (27) est engagée dans le support (26) correspondant et ladite partie de travail (28) est la partie active de ladite machine de travail du sol (1). La tâche de ladite partie de travail (28) desdits outils (25) est de rendre la terre meuble pour les semailles. Lesdits outils (25) sont disposés par paires, et chaque paire est liée à une face respective du flasque (24) correspondant. Au sein d'une même paire, les deux outils (25) sont disposés, de manière sensiblement symétrique, autour de l'axe longitudinal (17) dudit rotor (5). Avantageusement les deux paires d'outils (25) d'un même flasque (24) sont décalées l'une de l'autre d'un angle d'environ 90 degrés. De ce fait le flasque (24), visible sur la figure 4, a sensiblement la forme d'un carré, et chaque coin dudit carré supporte un outil (25) de travail. On notera qu'un décalage angulaire entre deux flasques (24) immédiatement voisins est avantageusement de l'ordre de 30 degrés, tel que représenté sur les figures 1 et 3. Lesdits outils (25) décrivent ainsi une quadruple hélice le long dudit tube (23). Il en découle un travail moins saccadé, car lors de la rotation dudit tube (23), lesdits outils (25) viennent frapper le sol pratiquement l'un après l'autre.

Selon un autre exemple de réalisation de ladite fraise rotative (1) représentée avec son rotor (5) sur la figure 2, lesdits flasques (24) ne sont pas décalés angulairement l'un par rapport à l'autre. De ce fait, à chaque quart de tour dudit rotor (5), un quart des outils (25) vient simultanément frapper le sol.

A la lumière des figures 2 à 4, lesdits outils (25) ne sont pas orientés radialement par rapport audit axe longitudinal (17) du rotor (5). Mais, on le voit plus particulièrement sur les figures 4 et 5, l'axe longitudinal (29) de chaque outil (25) est incliné vers l'arrière en tenant compte du sens de rotation (18) dudit rotor (5). Une telle orientation donne avantageusement à l'outil (25) un effet de labour.

Chaque support (26) est réalisé sous la forme d'un fourreau (30) soudé sur une face d'un flasque (24) correspondant. Chaque fourreau (30) et la face du flasque (24) correspondant forment un logement (31) dans lequel se glisse un outil (25) respectif. Ledit logement (31) présente une forme complémentaire à ladite partie de liaison (27) d'un outil (25) correspondant. Les dimensions de ladite partie de liaison (27) et dudit logement (31) sont avantageusement choisies pour assurer un jeu mécanique optimal de manière à favoriser un démontage rapide desdits outils de travail (25) de leur support (26), en l'occurrence du fourreau (30) respectif.

Selon l'exemple de réalisation conforme à l'invention, le maintien de l'orientation dudit outil (25) par rapport audit rotor (5) est principalement assuré par ladite partie de liaison (27) qui entre en contact avec ledit fourreau (30) correspondant. Ladite machine de travail du sol (1) conforme à l'invention comporte également un moyen de maintien (32) retenant ledit outil de travail (25) dans le fourreau (30) respectif. Ledit moyen de maintien (32) empêche une désolidarisation entre l'outil de travail (25) et le fourreau (30) correspondant.

Comme représenté sur la figure 5, chaque outil (25) comporte une fente ouverte (33), à une extrémité dudit outil (25), destinée à coopérer avec ledit moyen de maintien (32) correspondant. Ladite fente ouverte (33) a sensiblement la forme d'un trou oblong débouchant. Ladite fente ouverte (33) est située à l'opposé de la partie de travail (28) de l'outil (25) correspondant. L'axe longitudinal (34) de ladite fente ouverte (33) est sensiblement parallèle à l'axe longitudinal (29) dudit outil (25). D'une manière avantageuse ledit axe (34) de ladite fente ouverte (33) est sensiblement confondu avec l'axe longitudinal (29) dudit outil (25). A l'extrémité de ladite partie de liaison (27) de l'outil (25) correspondant se trouve une face arrière (35). De manière avantageuse, ladite fente (33) est réalisée ouverte vers ladite face arrière (35) dudit outil (25), afin de permettre une fixation rapide de l'outil (25) sur ledit flasque (24). Lors de l'assemblage, chaque outil (25) est glissé dans le fourreau (30) correspondant par un mouvement de translation, dans un sens de montage (36). Ladite fente ouverte (33) est dirigée au moins sensiblement suivant ledit sens de montage (36). Dans cet exemple de réalisation visible sur la figure 5, le sens de montage (36) est dirigé suivant le sens de rotation (18) du rotor (5). Ladite partie de liaison (27) pénètre dans ledit logement (31) jusqu'à l'arrivée en butée de ladite fente ouverte (33) contre ledit moyen de maintien (32). Ledit moyen de maintien (32) traverse d'une part, ledit flasque (24) et ledit fourreau (30) et d'autre part, ladite fente ouverte (33) ménagée dans ladite partie de liaison (27) dudit outil de travail (25).

Dans le mode de réalisation suivant la figure 6, ledit moyen de maintien (32) est réalisé au moyen d'une vis (37). Ladite vis (37) est associée à une rondelle d'appui (38) et un écrou (39). Lorsque ledit outil (25) est monté, son axe longitudinal (29) est sensiblement perpendiculaire à l'axe longitudinal (17) dudit rotor (5). Ladite vis (37) traverse de part en part ledit fourreau (30), ledit flasque (24) et l'outil (25) correspondant. Ladite vis (37) contribue également au positionnement de l'outil (25) sur ledit flasque (24). Le fond de ladite fente ouverte (33) doit être en butée contre ladite vis (37) afin d'assurer un positionnement des outils (25) engendrant une bonne répartition des efforts sur la partie de travail (28) et, par conséquent une usure uniforme desdits outils (25) sur un même flasque (24). Par ailleurs, ladite vis (37) étant serrée, empêche un mouvement de translation entre ledit outil (25) et ledit fourreau (30) suivant ledit sens de montage (36).

Un avantage de la machine conforme à l'invention est lié à un démontage/remontage rapide desdits outils de travail (25). La fixation de chaque outil (25) sur ledit flasque (24) est effectuée, de manière amovible, à l'aide de ladite vis (37). Le remplacement des outils (25) peut ainsi être effectué de manière simple et rapide. A cet effet, il suffit de serrer ou de desserrer partiellement ledit moyen de maintien (32). Pour simplifier cette opération, la tête de la vis (37) est noyée dans ledit fourreau (30) afin de supprimer la rotation de la tête de ladite vis (37) lors d'une action sur l'écrou (39) correspondant. Ledit fourreau (30) présente avantageusement une forme (40) adaptée pour le logement de la tête de ladite vis (37). Ladite rondelle d'appui (38) et ledit écrou (39) sont, quant à eux, apposés sur le flasque (24) et facilement accessible lors d'un échange d'outil.

Dans l'exemple de réalisation représenté conforme à l'invention sur les figures 4 et 5, les opérations de changement d'outils (25) sur ledit rotor (5) de ladite fraise rotative (1) se résume donc à débloquer l'écrou (39) pour désolidariser l'outil (25) dudit flasque (24). L'outil usagé étant libre, il suffit de tirer ledit outil (25) hors du fourreau (30) correspondant suivant un sens de démontage (41). Ledit sens de démontage (41) est dirigé dans le sens inverse du sens de rotation (18) dudit rotor (5). Un outil neuf peut finalement être engagé dans ledit fourreau (30) suivant ledit sens de montage (36). Le blocage de l'outil (25), dans le fourreau (30) correspondant, est assuré par le serrage dudit élément de maintien (32) à un couple déterminé. Dans cet exemple de réalisation, l'utilisateur agit essentiellement sur l'écrou (39), en le vissant ou le dévissant partiellement, lors d'un montage ou d'un démontage d'un outil (25).

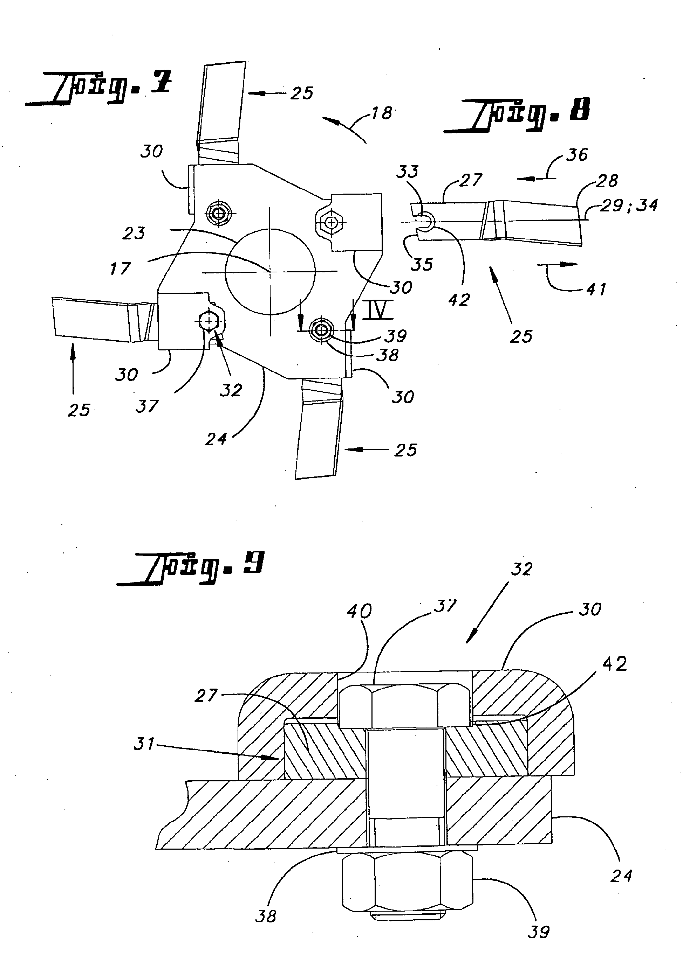

Les figures 7 à 9 représentent encore un autre exemple de réalisation d'une fixation rapide pour une machine agricole de travail du sol selon la présente invention. Cet autre exemple de réalisation d'une fixation rapide d'un outil de travail du sol dans son support respectif comporte un certain nombre d'éléments qui ont été décrits précédemment. Ces éléments garderont par conséquent te même numéro de repère et ne seront pas décrits une seconde fois.

La fixation rapide selon cette autre forme de réalisation est dans l'ensemble semblable à ladite fixation représentée sur la figure 6. La seule différence réside dans le fait que ladite partie de liaison (27) dudit outil (25) comporte, en sus de la fente ouverte (33), un obstacle visible sur la figure 8.

Lors du fonctionnement de ladite machine agricole de travail du sol (1), il peut arriver que des phénomènes de matage de ladite zone de fixation (27) ou des phénomènes de vibrations entraînent une perte d'adhérence entre l'outil (25) et son logement (31). Dans un tel cas, l'outil (25) risquerait de glisser hors de son logement (31). Pour remédier à ce problème, ladite partie de liaison (27) est avantageusement dotée d'un obstacle. Ledit obstacle est destiné à coopérer avec une forme complémentaire de manière à retenir quelque peu l'outil (25) dans son logement (31).

Dans l'exemple de réalisation représenté sur les figures 8 et 9, ledit obstacle est réalisé avantageusement au moyen d'une empreinte (42) et ladite forme complémentaire par ladite vis (37). D'une manière préférentielle, lors du montage dudit outil (25) dans ledit fourreau (30), la tête de la vis (37) vient se prendre dans ladite empreinte (42). Ladite tête de la vis (37) associée à l'empreinte (42) constitue ainsi une butée empêchant tout mouvement de translation dudit outil (25) dans le sens de démontage (41). Comme représenté plus précisément sur la figure 8, ladite empreinte (42) est donc réalisée au niveau de ladite fente ouverte (33). La forme de ladite empreinte (42) est de préférence circulaire.

A la lumière de la figure 9, on voit que la profondeur de l'empreinte (42) est relativement faible. De préférence, cette empreinte (42) est inférieure à un millimètre. Par conséquent, ladite butée permet tout de même un démontage rapide dudit outil (25).

Selon un autre exemple de réalisation, non représenté, ladite partie de liaison (27) de l'outil (25) peut être dotée de deux empreintes (42). La première empreinte (42) est positionnée conformément à la description faite précédemment alors que la deuxième empreinte (42) est ménagée sur la surface opposée de ladite première empreinte (42). Ladite deuxième empreinte (42) est ainsi en contact avec ledit flasque (24). Ledit flasque (24) comporte également une forme complémentaire afin de réaliser un obstacle.

Le rotor (5) et la machine agricole de travail du sol (1) qui viennent d'être décrits, ne sont qu'un exemple de réalisation et d'utilisation qui ne saurait en aucun cas limiter le domaine de protection défini par les revendications suivantes. Différentes modifications restent possibles, notamment en ce qui concerne la constitution des divers éléments ou par substitution d'équivalents techniques.

C'est ainsi qu'il est parfaitement possible d'agencer le moyen d'arrêt (32) liant les outils de travail (25) audit tube (23) dudit rotor (5) d'une manière différente que celle représentée sur les figures. Les outils (25) peuvent parfaitement être agencés de manière qu'ils soient, selon une vue latérale dudit rotor (5), décalés d'un angle différent les uns par rapport aux autres autour de l'axe de rotation (17) du rotor (5).

Il est également parfaitement imaginable de mettre un nombre de paire d'outils (25) différent par flasque (24) et ainsi lesdits outils (25) seraient décalés entre eux d'un angle différent de 90°.

Il est encore parfaitement envisageable que la présente invention trouve son application sur d'autres machines de travail du sol comme par exemple des herses rotatives ou des machines agricoles composées de rouleaux animés suite au déplacement de l'outil sur le sol.

Il est aussi possible de réaliser une empreinte (42) d'une toute autre forme, par exemple carrée, sur la partie de liaison (27) de l'outil de travail du sol (25).

Dans l'exemple de réalisation représenté sur les figures 8 et 9, ledit obstacle est formé par ledit outil (25) et ladite vis (37). Il est aussi imaginable de réaliser un obstacle en associant uniquement ledit outil (25) et ledit flasque (24). Dans un tel cas, on associe par exemple un bossage et un creux réalisés sur les faces en vis-à-vis dudit flasque (24) et dudit outil (25).

## Revendications

1. Machine agricole de travail du sol comportant :
- un châssis (4) pouvant être attelé à un tracteur (2) ;
- un rotor (5) lié audit châssis (4) et animé en rotation lors du travail autour d'un axe (17), ledit rotor (5) comportant :
- au moins un support (26) lié à un organe porteur (23), ledit support (26) comportant au moins un fourreau (30) ;
- au moins un outil (25) présentant une partie de liaison (27) et une partie de travail (28) et lié de manière amovible à un support (26) respectif, ledit ou au moins un desdits outils (25) comporte une fente ouverte (33) dirigée sensiblement suivant un sens de montage (36) dudit outil (25) dans ledit support correspondant (26) ; et
- un unique moyen de maintien (32) immobilisant ledit outil (25) dans son support respectif (26)
***caractérisée par le fait* que** l'axe (34) de ladite fente ouverte (33) est sensiblement parallèle à un axe longitudinal (29) dudit outil (25).

2. Machine de travail du sol selon la revendication 1, ***caractérisée par le fait* que** ladite fente ouverte (33) appartient à ladite partie de liaison (27) dudit outil (25).

3. Machine de travail du sol selon la revendication 1 ou 2, ***caractérisée par le fait* que** ladite fente ouverte (33) est située, à l'opposé de la partie de travail (28).

4. Machine de travail du sol selon l'une quelconque des revendications 1 à 3, ***caractérisée par le fait* que** ladite fente (33) est ouverte vers une face arrière (35) dudit outil (25).

5. Machine de travail du sol selon l'une quelconque des revendications 1 à 4, ***caractérisée par le fait* que** l'axe (34) de ladite fente ouverte (33) est sensiblement confondu à l'axe longitudinal (29) dudit outil (25).

6. Machine de travail du sol selon l'une quelconque des revendications 1 à 5, ***caractérisée par le fait* que** lors du montage dudit outil (25) dans son support respectif (26), l'axe (34) de ladite fente ouverte (33) est sensiblement perpendiculaire à l'axe (17) dudit rotor (5).

7. Machine de travail du sol selon l'une quelconque des revendications 1 à 6, ***caractérisée par le fait* que** lors du montage ladite fente ouverte (33) dudit outil (25) est en butée contre ledit moyen de maintien (32).

8. Machine de travail du sol selon l'une quelconque des revendications 1 à 7, ***caractérisée par le fait* que** ladite fente ouverte (33) est du type trou oblong débouchant.

9. Machine de travail du sol selon l'une quelconque des revendications 1 à 8, ***caractérisée par le fait* que** ladite partie de travail (28) et ladite partie de liaison (27) sont sensiblement situées dans un même plan.

10. Machine de travail du sol selon l'une quelconque des revendications 1 à 9, ***caractérisée par le fait* que** ledit moyen de maintien (32) traverse ledit support (26) et ledit outil (25).

11. Machine de travail du sol selon l'une quelconque des revendications 1 à 10, ***caractérisée par le fait* que** ledit moyen de maintien (32) est composé d'une vis (37).

12. Machine de travail du sol selon la revendication 11, ***caractérisée par le fait* que** la tête de ladite vis (37) est noyée dans le support (26) correspondant.

13. Machine de travail du sol selon les revendications 1 à 12, ***caractérisée par le fait* que** ladite partie de liaison (27) dudit outil (25) comporte au moins un obstacle destiné à coopérer avec une forme complémentaire du moyen de maintien (32) et/ou du support (26) correspondant.

14. Machine de travail du sol selon la revendication 13, ***caractérisée par le fait* que** ledit obstacle est situé au niveau de ladite fente ouverte (33).

15. Machine de travail du sol selon la revendication 13, ***caractérisée par le fait* que** ladite vis (37) constitue ladite forme complémentaire.

16. Machine de travail du sol selon la revendication 13 ou 14, ***caractérisée par le fait* que** ledit obstacle est réalisé par une empreinte (42).

17. Machine de travail du sol selon la revendication 16, ***caractérisée par le fait* que** la profondeur de ladite empreinte (42) est inférieure à un millimètre.

18. Machine de travail du sol selon la revendication 16 ou 17, ***caractérisée par le fait* que** ladite empreinte (42) est de forme circulaire.

19. Machine de travail du sol selon l'une quelconque des revendications 1 à 18, ***caractérisée par le fait* qu'**elle constitue une fraise rotative (1).

## Claims

1. Agricultural soil-working machine comprising:
- a chassis (4) which can be hitched to a tractor (2);
- a rotor (5) connected to the said chassis (4) and driven in rotation during work about an axis (17), the said rotor (5) comprising:
- at least one support (26) connected to a carrying member (23), the said support (26) comprising at least one sheath (30);
- at least one tool (25) having a connecting portion (27) and a working portion (28) and connected removably to a respective support (26), the said or at least one of the said tool(s) (25) comprising an open slot (33) directed substantially in a direction for mounting (36) the said tool (25) in the said corresponding support (26); and
- a single retention means (32) immobilizing the said tool (25) in its respective support (26)
***characterized in* that** the axis (34) of the said open slot (33) is substantially parallel to a longitudinal axis (29) of the said tool (25).

2. Soil-working machine according to Claim 1, ***characterized in* that** the said open slot (33) belongs to the said connecting portion (27) of the said tool (25).

3. Soil-working machine according to Claim 1 or 2, ***characterized in* that** the said open slot (33) is situated at the opposite end to the working portion (28).

4. Soil-working machine according to any one of Claims 1 to 3, ***characterized in* that** the said slot (33) is open towards a rear face (35) of the said tool (25).

5. Soil-working machine according to any one of Claims 1 to 4, ***characterized in* that** the axis (34) of the said open slot (33) is substantially coincident with the longitudinal axis (29) of the said tool (25).

6. Soil-working machine according to any one of Claims 1 to 5, ***characterized in* that**, when the said tool (25) is mounted in its respective support (26), the axis (34) of the said open slot (33) is substantially perpendicular to the axis (17) of the said rotor (5).

7. Soil-working machine according to any one of Claims 1 to 6, ***characterized in* that**, during mounting, the said open slot (33) of the said tool (25) butts against the said retention means (32).

8. Soil-working machine according to any one of Claims 1 to 7, ***characterized in* that** the said open slot (33) is of the open-ended oblong hole type.

9. Soil-working machine according to any one of Claims 1 to 8, ***characterized in* that** the said working portion (28) and the said connecting portion (27) are substantially situated in one and the same plane.

10. Soil-working machine according to any one of Claims 1 to 9, ***characterized in* that** the said retention means (32) passes through the said support (26) and the said tool (25).

11. Soil-working machine according to any one of Claims 1 to 10, ***characterized in* that** the said retention means (32) consists of a screw (37).

12. Soil-working machine according to Claim 11, ***characterized in* that** the head of the said screw (37) is sunk into the corresponding support (26).

13. Soil-working machine according to Claims 1 to 12, ***characterized in* that** the said connecting portion (27) of the said tool (25) comprises at least one obstacle intended to interact with a matching shape of the retention means (32) and/or of the corresponding support (26).

14. Soil-working machine according to Claim 13, ***characterized in* that** the said obstacle is situated at the said open slot (33).

15. Soil-working machine according to Claim 13, ***characterized in* that** the said screw (37) forms the said matching shape.

16. Soil-working machine according to Claim 13 or 14, ***characterized in* that** the said obstacle is made by a recess (42).

17. Soil-working machine according to Claim 16, ***characterized in* that** the depth of the said recess (42) is less than one millimetre.

18. Soil-working machine according to Claim 16 or 17, ***characterized in* that** the said recess (42) is of circular shape.

19. Soil-working machine according to any one of Claims 1 to 18, ***characterized in* that** it forms a rotary tiller (1).

## Patentansprüche

1. Landwirtschaftliche Maschine zur Bodenbearbeitung mit:
- einem Gestell (4), das an einen Traktor (2) gekuppelt werden kann;
- einem Rotor (5), der mit dem Gestell (4) verbunden ist und bei der Arbeit um eine Achse (17) drehangetrieben wird, wobei der Rotor (5):
- mindestens eine Stütze (26), die mit einem Tragelement (23) verbunden ist, wobei die Stütze (26) mindestens eine Hülse (30) umfasst;
- mindestens ein Werkzeug (25), das einen Verbindungsteil (27) und einen Arbeitsteil (28) aufweist und abnehmbar an einer jeweiligen Stütze (26) befestigt ist, wobei das oder mindestens eines der Werkzeuge (25) einen offenen Schlitz (33) umfasst, der im Wesentlichen in Montagerichtung (36) des Werkzeugs (25) in der entsprechenden Stütze (26) ausgerichtet ist; und
- ein einziges Haltemittel (32), das das Werkzeug (25) in ihrer jeweiligen Stütze (26) feststellt;
umfasst; ***dadurch gekennzeichnet,* dass** die Achse (34) des offenen Schlitzes (33) im Wesentlichen zu einer Längsachse (29) des Werkzeugs (25) parallel ist.

2. Bodenbearbeitungsmaschine nach Anspruch 1, ***dadurch gekennzeichnet,* dass** der offene Schlitz (33) dem Verbindungsteil (27) des Werkzeugs (25) angehört.

3. Bodenbearbeitungsmaschine nach Anspruch 1 oder 2, ***dadurch gekennzeichnet,* dass** der offene Schlitz (33) gegenüber dem Arbeitsteil (28) angeordnet ist.

4. Bodenbearbeitungsmaschine nach irgend einem der Ansprüche 1 bis 3, ***dadurch gekennzeichnet,* dass** der Schlitz (33) zu einer Rückseite (35) des Werkzeugs (25) hin offen ist.

5. Bodenbearbeitungsmaschine nach irgend einem der Ansprüche 1 bis 4, ***dadurch gekennzeichnet,* dass** die Achse (34) des offenen Schlitzes (33) im Wesentlichen mit der Längsachse (29) des Werkzeugs (25) zusammenfällt.

6. Bodenbearbeitungsmaschine nach irgend einem der Ansprüche 1 bis 5, ***dadurch gekennzeichnet,* dass** bei der Montage des Werkzeugs (25) in seiner jeweiligen Stütze (26) die Achse (34) des offenen Schlitzes (33) im Wesentlichen senkrecht auf die Achse (17) des Rotors (5) ist.

7. Bodenbearbeitungsmaschine nach irgend einem der Ansprüche 1 bis 6, ***dadurch gekennzeichnet,* dass** bei der Montage der offene Schlitz (33) des Werkzeugs (25) am Haltemittel (32) anschlägt.

8. Bodenbearbeitungsmaschine nach irgend einem der Ansprüche 1 bis 7, ***dadurch gekennzeichnet,* dass** der offene Schlitz (33) vom Typ durchgehendes Langloch ist.

9. Bodenbearbeitungsmaschine nach irgend einem der Ansprüche 1 bis 8, ***dadurch gekennzeichnet,* dass** der Arbeitsteil (28) und der Verbindungsteil (27) im Wesentlichen in derselben Ebene angeordnet sind.

10. Bodenbearbeitungsmaschine nach irgend einem der Ansprüche 1 bis 9, ***dadurch gekennzeichnet,* dass** das Haltemittel (32) die Stütze (26) und das Werkzeug (25) durchquert.

11. Bodenbearbeitungsmaschine nach irgend einem der Ansprüche 1 bis 10, ***dadurch gekennzeichnet,* dass** das Haltemittel (32) aus einer Schraube (37) besteht.

12. Bodenbearbeitungsmaschine nach Anspruch 11, ***dadurch gekennzeichnet,* dass** der Kopf der Schraube (37) in die entsprechende Stütze (26) eingesetzt ist.

13. Bodenbearbeitungsmaschine nach den Ansprüchen 1 bis 12, ***dadurch gekennzeichnet,* dass** der Verbindungsteil (27) des Werkzeugs (25) mindestens ein Hindernis umfasst, das dazu bestimmt ist, mit einer komplementären Form des Haltemittels (32) und/oder der entsprechenden Stütze (26) zusammenzuwirken.

14. Bodenbearbeitungsmaschine nach Anspruch 13, ***dadurch gekennzeichnet,* dass** das Hindernis im Bereich des offenen Schlitzes (33) angeordnet ist.

15. Bodenbearbeitungsmaschine nach Anspruch 13, ***dadurch gekennzeichnet,* dass** die Schraube (37) die komplementäre Form darstellt.

16. Bodenbearbeitungsmaschine nach Anspruch 13 oder 14, ***dadurch gekennzeichnet,* dass** das Hindernis durch eine Vertiefung (42) verwirklicht ist.

17. Bodenbearbeitungsmaschine nach Anspruch 16, ***dadurch gekennzeichnet,* dass** die Tiefe der Vertiefung (42) kleiner als ein Millimeter ist.

18. Bodenbearbeitungsmaschine nach Anspruch 16 oder 17, ***dadurch gekennzeichnet,* dass** die Vertiefung (42) kreisförmig ist.

19. Bodenbearbeitungsmaschine nach irgend einem der Ansprüche 1 bis 18, ***dadurch gekennzeichnet,* dass** sie eine Rotorfräse (1) darstellt.
